# EUROPÄISCHE PATENTSCHRIFT

(11) **EP 1 270 391 B1**
(45) Veröffentlichungstag und Bekanntmachung des Hinweises auf die Patenterteilung: **12.07.2006**
(21) Anmeldenummer: 02010406.3
(22) Anmeldetag: 08.05.2002
(51) Int. Cl.: B62K 25/24, B62K 21/14

(54) **Führung für das Vorderrad eines Motorrades**
Guide for the front wheel of a motorcycle
Guide pour la roue avant d'une motocyclette

(30) Priorität: 23.06.2001 DE 10130406
(43) Veröffentlichungstag der Anmeldung: 02.01.2003
(73) Patentinhaber: Bayerische Motoren Werke Aktiengesellschaft, 80809 München (DE)
(72) Erfinder: Berkmann, Franz, 80935 München (DE)

(56) Entgegenhaltungen:
- EP-A- 0 800 986
- DE-A- 19 957 964
- US-A- 5 749 590
- PATENT ABSTRACTS OF JAPAN vol. 015, no. 447 (M-1179), 14. November 1991 (1991-11-14) -& JP 03 189280 A (YAMAHA MOTOR CO LTD), 19. August 1991 (1991-08-19)

## Beschreibung

Die Erfindung betrifft eine Führung für das Vorderrad eines Motorrades, umfassend eine Gabel mit zwei Holmen, die durch eine obere und eine untere Gabelbrücke miteinander verbunden sind, einen am Motorradrahmen befestigten Lenkkopf, in dem ein Steuerrohr drehbar gelagert ist, das zwischen der oberen und der unteren Gabelbrücke angebracht ist, einen oberen und zwei untere Lenker, die mit den Gabelholmen schwenkbar verbunden sind, eine mit dem oberen und den beiden unteren Lenkern schwenkbar verbundene Koppel, die als Radträger ausgebildet ist, wobei die Lenker und die Koppel zwei deckungsgleiche Viergelenke bilden, und ein Federbein, das im Lenkkopf angeordnet ist und sich mit seinem einen Ende am oberen Lenker abstützt.

Bei einer in der DE 199 57 964 A1 offenbarten Vorderradführung dieser Bauart stützt sich das Federbein, das im Lenkkopf angeordnet ist, mit seinem einen Ende am oberen Lenker und mit seinem anderen Ende an der oberen Gabelbrücke ab. Das hat den Nachteil, dass diese mehrteilig und aufwändig zu montieren ist.

Die US 5 749 590 beschreibt eine Vorderradaufhängung für Fahrräder oder Motorräder, bei der ein Federbein vorgesehen ist, dessen oberes Ende in einem Steuerrohr abgestützt ist.

Aufgabe der Erfindung ist es gattungsgemäße Vorderradführung zu schaffen, deren Federbein an dessen oberem Ende so abgestützt ist, dass die Abstützung konstruktiv einfach aufgebaut und einfach zu montieren ist.

Erfindungsgemäß wird diese Aufgabe durch die Merkmale das kennzeichnenden Teils von Anspruch 1 gelöst.

Diese Bauweise ist nicht nur konstruktiv einfach, sondern sie erlaubt auch eine sehr einfache Montage des Federbeins im Steuerrohr und damit eine einfache Montage des gesamten Bereichs um die Gabelbrücken. Die Anzahl der Teile und Fügestellen wird gegenüber dem angeführten Stand der Technik wesentlich reduziert. Damit werden Gewicht und Kosten reduziert, des weiteren wird weniger Bauraum benötigt.

Um die ungefederten Massen möglichst gering zu halten, ist vorgesehen, dass das die Feder- und Dämpfungselemente enthaltende Gehäuse des Federbeins im Steuerrohr angebracht ist, und dass die Stange des Federbeins mit dem oberen Lenker gelenkig verbunden ist.

Das Steuerrohr ist an seinem oberen Ende zur Abstützung des Federbeins auf einen kleineren Durchmesser eingezogen, um dessen Außenumfang ein Sitz für ein oberes Wälzlager ausgebildet ist, das zur Festlegung des Steuerrohrs im Lenkkopf dient. Dies ist eine vortreffliche Lösung zur Erzielung eines konstruktiv einfachen Aufbaus.

Bei einer bevorzugten Ausführungsform der Erfindung ist am Außenumfang des unteren Endes des Steuerrohrs ein Sitz für ein unteres Wälzlager ausgebildet, das zur Festlegung des Steuerrohrs im Lenkkopf dient. Diese Ausführung vereinfacht den Aufbau und die Montage zusätzlich.

Eine vorteilhafte Ausführung der Erfindung ist dadurch gekennzeichnet, dass das obere und das untere Wälzlager als teilbare Lager ausgeführt sind, wobei die Lageraußenringe im Lenkkopf jeweils mit einer Presspassung festgelegt sind und der Lagerinnenring des unteren Lagers mit einer Presspassung und der Lagerinnenring des oberen Lagers mit einem Schiebesitz jeweils auf dem Steuerrohr festgelegt sind. Insbesondere wenn die Wälzlager Schrägkugellager oder Kegelrollenlager sind, wird die Montage dadurch weiter wesentlich vereinfacht.

Durch die Erfindung kann die komplette Vorderradführung mit Federbein vormontiert werden.

Ein Ausführungsbeispiel der Erfindung ist in der Zeichnung dargestellt und wird nachfolgend näher erläutert. Es zeigen:
- Figur 1: eine räumlich dargestellte Ansicht der Führung für das Vorderrad eines Motorrades,
- Figur 2: in anderem Maßstab einen Schnitt durch das Steuerrohr in räumlicher Darstellung und
- Figur 3: in anderem Maßstab einen Teilschnitt durch die Steuerrohrbaugruppe in räumlicher Explosionsdarstellung.

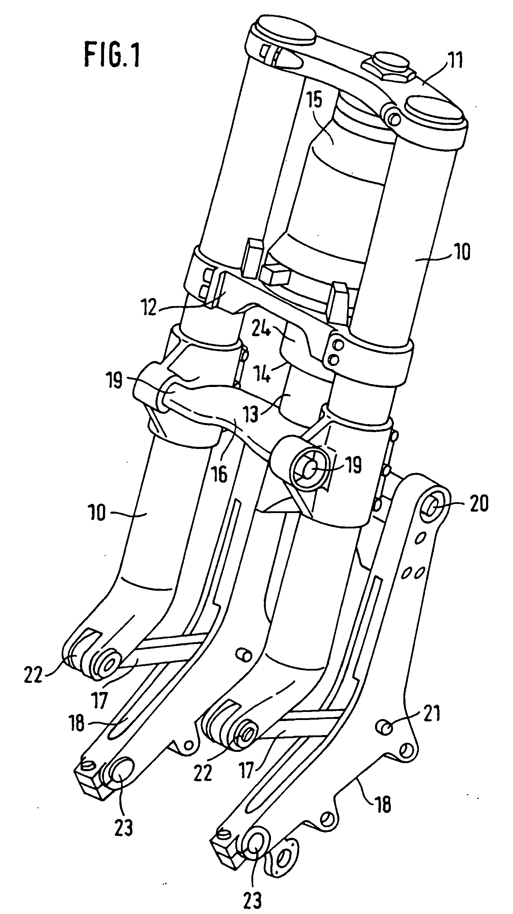

In **Figur 1** ist eine Vorderradführung für ein nicht dargestelltes Vorderrad eines Motorrades gezeigt. Diese besteht aus einer Gabel mit zwei Holmen 10, die durch eine obere und eine untere Gabelbrücke 11 und 12 mit einander verbunden und über einen nicht dargestellten Lenkkopf mit dem nicht dargestellten Motorradrahmen drehbar verbunden sind. Die obere Gabelbrücke 11 dient zur Befestigung einer nicht dargestellten Lenkstange. Mit den beiden Gabelholmen 10 sind ein oberer Lenker 16 und zwei untere Lenker 17 schwenkbar verbunden. Zwei Koppeln 18 sind mit dem hinteren Ende des oberen bzw. des zugeordneten unteren Lenkers 16, 17 schwenkbar verbunden. Die beiden Holme 10, der obere Lenker 16, die beiden unteren Lenker 17 und die beiden Koppeln 18 bilden somit zwei Viergelenke mit horizontalen Achsen 19, 20, 21, 22. Die den Achsen 19, 20, 21 und 22 zugeordneten Gelenke sind mit Wälzlagern versehen. Die beiden Koppeln 18 sind als Radträger ausgebildet und nehmen in ihren nach unten verlängerten Enden 23 eine nicht dargestellte Steckachse oder dergleichen zur Lagerung des Vorderrades auf.

Ein Federbein 14 ist über ein Steuerrohr 15 im nicht gezeichneten Lenkkopf gelagert. Eine Stange 13 des Federbeins, dessen unteres Ende, ist über ein Gelenk mit dem oberen Lenker 16 verbunden. Die Anordnung ist dabei so getroffen, dass die Längsachse des Federbeins 14 bzw. der Stange 13 mit der Lenkdrehachse zusammenfällt. Deshalb sind die einem Verdrehen des Lenkers entgegenwirkenden Trägheitskräfte sehr klein. Ein Gehäuse 24 des Federbeins 14, das sich in das Steuerrohr 15 hinein erstreckt, stützt sich mit seinem oberen Ende in diesem ab und ist dort ebenfalls befestigt.

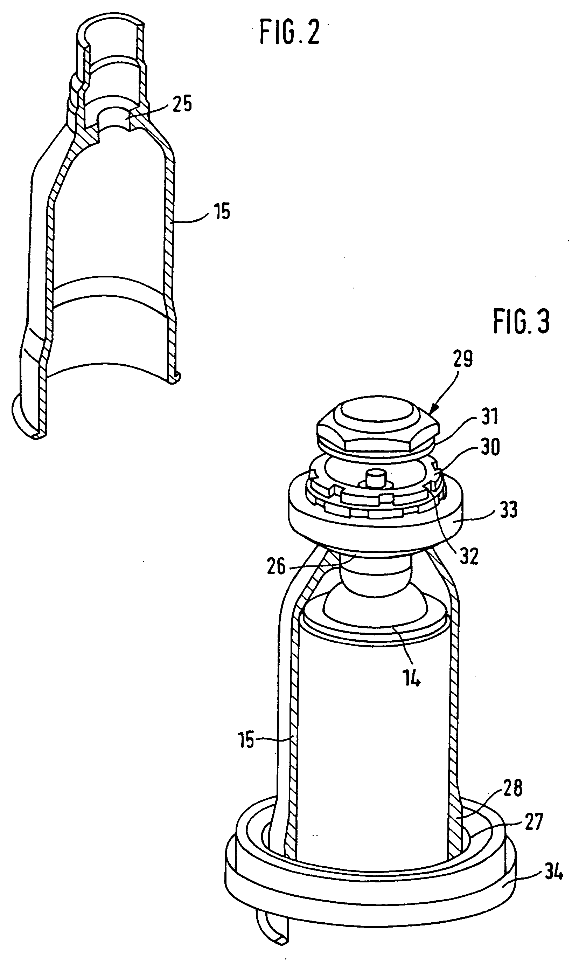

**Figur 2** zeigt das Steuerrohr 15, das im oberen Bereich auf einen kleineren Durchmesser eingezogen ist und dort eine Abstützschulter 25 für das Federbein 14 (Figur 1, Figur 3) besitzt.

**Figur 3** zeigt das Steuerrohr 15 mit weiteren Bauteilen. Um den Außenumfang des kleineren Durchmessers ist ein Sitz für oberes Wälzlager 26 ausgebildet, das zur Festlegung des Steuerrohrs 15 im Lenkkopf dient. Dieses Wälzlager 26 kann ebenso, wie ein am Außenumfang des unteren Endes des Steuerrohrs 15 mit einem weiteren Sitz festgelegtes unteres Wälzlager 27, als Schrägkugellager oder Kegelrollenlager ausgebildet sein. Die Wälzlager 26,27 sind als teilbare Lager ausgeführt, wobei die Lageraußenringe im Lenkkopf jeweils mit einer Presspassung festgelegt sind und der Lagerinnenring des unteren Wälzlagers 27 mit einer Presspassung und der Lagerinnenring des oberen Wälzlagers 26 mit einem Schiebesitz jeweils auf dem Steuerrohr 15 festgelegt sind.

Das Steuerrohr 15 wird in die untere Gabelbrücke 12 (Fig. 1) eingepresst. Dazu ist an dem Steuerrohr 15 eine sich für eine Presspassung eignende Berührfläche 28 ausgebildet. Die obere Gabelbrücke 11 (Fig. 1) dagegen, wird am eingezogenen Durchmesser des Steuerrohrs 15 über eine Mutter 29 und deren Kontermutter 30 festgeklemmt, indem diese auf das Steuerrohr 15 aufgeschraubt werden. Weitere an der verdrehbaren Verbindung von Steuerrohr 15 und Lenkkopf beteiligte Bauteile sind eine Scheibe 31, eine Einstellhilfe 32 und zwei Dichtscheiben 33,34.

## Patentansprüche

1. Führung für das Vorderrad eines Motorrades, umfassend eine Gabel mit zwei Gabelholmen (10), die durch eine obere (11) und eine untere Gabelbrücke (12) miteinander verbunden sind, einen am Motorradrahmen befestigbaren Lenkkopf, in dem ein Steuerrohr (15) drehbar gelagert ist, das zwischen der oberen und der unteren Gabelbrücke (11,12) angebracht ist, einen oberen (16) und zwei untere Lenker (17), die mit den Gabelholmen (10) schwenkbar verbunden sind, eine mit dem oberen und den beiden unteren Lenkern (16,17) schwenkbar verbundene Koppel (18), die als Radträger ausgebildet ist, wobei die Lenker (16,17) und die Koppel (18) zwei deckungsgleiche Viergelenke bilden, und ein Federbein (14), das im Lenkkopf angeordnet ist und sich mit seinem einen Ende am oberen Lenker (16) abstützt, **dadurch gekennzeichnet, dass** sich das Federbein (14) mit seinem anderen Ende im Steuerrohr (15) abstützt und dass das Steuerrohr (15) an seinem oberen Ende zur Abstützung des Federbeins (14) auf einen kleineren Durchmesser eingezogen ist, um dessen Außenumfang ein Sitz für oberes Wälzlager (26) ausgebildet ist, das zur Festlegung des Steuerrohrs (15) im Lenkkopf dient.

2. Führung nach Anspruch 1, **dadurch gekennzeichnet, dass** am Außenumfang des unteren Endes des Steuerrohrs (15) ein Sitz für ein unteres Wälzlager (27) ausgebildet ist, das zur Festlegung des Steuerrohrs (15) im Lenkkopf dient.

3. Führung nach einem der Ansprüche 1 oder 2, **dadurch gekennzeichnet, dass** das obere und das untere Wälzlager (26,27) als teilbare Lager ausgeführt sind, wobei die Lageraußenringe im Lenkkopf jeweils mit einer Presspassung festgelegt sind und der Lagerinnenring des unteren Lagers mit einer Presspassung und der Lagerinnenring des oberen Lagers mit einem Schiebesitz jeweils auf dem Steuerrohr (15) festgelegt sind.

4. Führung nach Anspruch 3, **dadurch gekennzeichnet, dass** die Wälzlager (26,27) Schrägkugellager oder Kegelrollenlager sind.

## Claims

1. A guide for the front wheel of a motorcycle, comprising a fork with two prongs (10) connected together by a top (11) and a bottom (12) fork bridge (12), a steering head for fastening to the motorcycle frame and in which a steering tube (15) is rotatably mounted and attached between the top and the bottom fork bridge (11, 12), a top (16) and two bottom control arms (17) pivotably connected to the fork prongs (10), a coupler (18) in the form of a wheel holder pivotably connected to the top and the two bottom control arms (16, 17) wherein the control arms (16, 17) and the coupler (18) form two congruent four-bar linkages, and a shock absorber (14) mounted in the steering head and with one end abutting the top control arm (16), **characterised in that** the other end of the shock absorber (14) abuts in the steering tube (15) and the top end of the steering tube (15) is given a reduced diameter in order to brace the shock absorber (14) and a seat for a top rolling bearing (26) is formed around its outer periphery for securing the steering tube (15) in the steering head.

2. A guide according to claim 1, **characterised in that** a seat for a bottom rolling bearing (27) for fastening the steering tube (15) in the steering head is formed on the outer periphery of the bottom end of the steering tube (15).

3. A guide according to claim 1 or claim 2, **characterised in that** the top and the bottom rolling bearings (26, 27) are divisible bearings, wherein the outer races thereof are each fixed with an interference fit in the steering head and the inner race of the bottom bearing is fixed to the steering tube (15) with an interference fit and the inner race of the top bearing is fixed to the steering tube with a sliding fit.

4. A guide according to claim 3, **characterised in that** the rolling bearings (26, 27) are angular ball bearings or tapered roller bearings.

## Revendications

1. Guidage pour la roue avant d'une motocyclette, comprenant
- une fourche avec deux longerons de fourche (10) reliés l'un à l'autre par des ponts supérieur (11) et inférieur (12),
- une tête de guidage pouvant être fixée au châssis de la motocyclette et dans laquelle est logé en rotation un tube de direction (15) situé entre les ponts de fourche supérieur et inférieur (11, 12),
- un guidon supérieur (16) et deux guidons inférieurs (17) reliés en pivotement aux longerons de fourche (10),
- une bielle (18) reliée en pivotement au guidon supérieur (16) et aux deux guidons inférieurs (17) et servant de support de roue,
- les guidons (16, 17) et la bielle (18) forment deux articulations à quatre joints coïncidentes, et une jambe de force (14) disposée dans la tête de guidage s'appuie par une de ses extrémités contre le guidon supérieur (16),
**caractérisé en ce que**
la jambe de force (14) prend appui dans le tube de direction (15) par son autre extrémité et pour supporter la jambe de force (14), le diamètre du tube de direction (15) est réduit au niveau de l'extrémité supérieure de ce tube autour de la périphérie extérieure duquel est formé un siège pour un palier à roulement supérieur (26) servant à fixer le tube de direction (15) dans la tête de guidage.

2. Guidage selon la revendication 1,
**caractérisé en ce qu'**
à la périphérie extérieure de l'extrémité inférieure du tube de direction (15) un siège est formé pour un palier à roulement inférieur (27) qui sert à fixer le tube de direction (15) dans la tête de guidage.

3. Guidage selon l'une quelconque des revendications 1 ou 2,
**caractérisé en ce que**
les paliers à roulement supérieur et inférieur (26, 27) sont des paliers divisibles, les bagues extérieures de palier étant chacune fixées dans la tête de guidage à l'aide d'un ajustage serré, et sur le tube de direction (15), la bague intérieure du palier inférieur est fixée par ajustage serré tandis que la bague intérieure du palier supérieur est fixée par un siège coulissant.

4. Guidage selon la revendication 3,
**caractérisé en ce que**
les paliers à roulement (26, 27) peuvent être des paliers à roulements à billes à portée oblique ou des paliers coniques à rouleaux.
